# EUROPEAN PATENT APPLICATION

(11) **EP 4 845 206 A1**
(43) Date of publication of application: **25.11.2026**
(21) Application number: 25741416.9
(22) Date of filing: 10.01.2025
(51) Int. Cl.: H04W 24/10

(54) **INFORMATION TRANSMISSION METHOD AND APPARATUS, AND COMMUNICATION DEVICE**

(30) Priority: 17.01.2024 CN 202410073522
(71) Applicant: Vivo Mobile Communication Co., Ltd., Dongguan, Guangdong 523863 (CN)
(72) Inventor: PAN, Xiang, Dongguan, Guangdong 523863 (CN)
(74) Representative: Walaski, Jan Filip
(86) International application number: PCT/CN2025/071662
(87) International publication number: WO 2025/152854

(57) **Abstract**

The present application relates to the technical field of communications, and discloses an information transmission method and apparatus, and a communication device. The information transmission method in the embodiments of the present application comprises: a terminal receives first information from a base station, the first information comprising first configuration information, the first configuration information being configuration information for indicating the reporting of auxiliary data acquisition information, and the auxiliary data acquisition information being auxiliary information for representing a data acquisition tendency or a data acquisition state; and the terminal sends second information to the base station, the second information comprising first auxiliary data acquisition information, and the first auxiliary data acquisition information being auxiliary data acquisition information for representing the data acquisition tendency or the data acquisition state of the terminal.

## Description

### CROSS-REFERENCE TO RELATED APPLICATIONS

This application claims priority to Chinese Patent Application No. 202410073522.8, filed in China on January 17, 2024, which is incorporated herein by reference in its entirety.

### TECHNICAL FIELD

This application pertains to the field of communication technologies, and specifically relates to an information transmission method and apparatus, and a communication device.

### BACKGROUND

For purposes such as performance analysis and model training, a network side may require a terminal to collect data and report the data. However, collecting data and reporting data by the terminal not only consumes storage space of the terminal but also consumes power of the terminal. With the deployment of artificial intelligence (Artificial Intelligence, AI)/machine learning (Machine Learning, ML) functions, the network side has an increasingly high demand for data collection by the terminal, leading to significant consumption of the terminal in data collection.

### SUMMARY

Embodiments of this application provide an information transmission method and apparatus, and a communication device, which can solve the problem of significant consumption by a terminal in data collection.

According to a first aspect, an information transmission method is provided, executed by a terminal. The method includes:
receiving, by the terminal, first information from a base station, where the first information includes first configuration information, the first configuration information is configuration information for indicating reporting of data collection assistance information, and the data collection assistance information is assistance information for representing a data collection preference or a data collection status; and
sending, by the terminal, second information to the base station, where the second information includes first data collection assistance information, and the first data collection assistance information is data collection assistance information for representing the data collection preference or data collection status of the terminal.

According to a second aspect, an information transmission method is provided, executed by a first base station. The method includes:
sending, by the first base station, first information to a first terminal, where the first information includes first configuration information, the first configuration information is configuration information for indicating reporting of data collection assistance information, and the data collection assistance information is assistance information for representing a data collection preference or a data collection status; and
receiving, by the first base station, second information from the first terminal, where the second information includes first data collection assistance information, and the first data collection assistance information is data collection assistance information for representing the data collection preference or data collection status of the first terminal.

According to a third aspect, an information transmission method is provided, executed by a first base station. The method includes:
receiving, by the first base station, eighth information from a fourth base station, where the eighth information includes second data collection assistance information, and the second data collection assistance information is data collection assistance information for representing a data collection preference or data collection status of a second terminal; where
the second terminal is a terminal that needs to establish a connection to the first base station.

According to a fourth aspect, an information transmission apparatus is provided, applied to a terminal. The apparatus includes:
a first receiving unit configured to receive first information from a base station, where the first information includes first configuration information, the first configuration information is configuration information for indicating reporting of data collection assistance information, and the data collection assistance information is assistance information for representing a data collection preference or a data collection status; and
a first sending unit configured to send second information to the base station, where the second information includes first data collection assistance information, and the first data collection assistance information is data collection assistance information for representing the data collection preference or data collection status of the terminal.

According to a fifth aspect, an information transmission apparatus is provided, applied to a first base station. The apparatus includes:
a first sending unit configured to send first information to a first terminal, where the first information includes first configuration information, the first configuration information is configuration information for indicating reporting of data collection assistance information, and the data collection assistance information is assistance information for representing a data collection preference or a data collection status; and
a first receiving unit configured to receive second information from the first terminal, where the second information includes first data collection assistance information, and the first data collection assistance information is data collection assistance information for representing the data collection preference or data collection status of the first terminal.

According to a sixth aspect, an information transmission apparatus is provided, applied to a first base station. The apparatus includes:
a receiving unit configured to receive eighth information from a fourth base station, where the eighth information includes second data collection assistance information, and the second data collection assistance information is data collection assistance information for representing a data collection preference or data collection status of a second terminal; where
the second terminal is a terminal that needs to establish a connection to the first base station.

According to a seventh aspect, a terminal is provided. The terminal includes a processor and a memory, where the memory stores a program or instructions capable of running on the processor, and the program or instructions, when executed by the processor, implement the steps of the method according to the first aspect.

According to an eighth aspect, a terminal is provided, including a processor and a communication interface, where the communication interface is configured to: receive first information from a base station, where the first information includes first configuration information, the first configuration information is configuration information for indicating reporting of data collection assistance information, and the data collection assistance information is assistance information for representing a data collection preference or a data collection status; and send second information to the base station, where the second information includes first data collection assistance information, and the first data collection assistance information is data collection assistance information for representing the data collection preference or data collection status of the terminal.

According to a ninth aspect, a network-side device is provided. The network-side device includes a processor and a memory, where the memory stores a program or instructions capable of running on the processor, and the program or instructions, when executed by the processor, implement the steps of the method according to the second aspect, or implement the steps of the method according to the third aspect.

According to a tenth aspect, a network-side device is provided, including a processor and a communication interface, where the communication interface is configured to: send first information to a first terminal, where the first information includes first configuration information, the first configuration information is configuration information for indicating reporting of data collection assistance information, and the data collection assistance information is assistance information for representing a data collection preference or a data collection status; and receive second information from the first terminal, where the second information includes first data collection assistance information, and the first data collection assistance information is data collection assistance information for representing the data collection preference or data collection status of the first terminal.

According to an eleventh aspect, a network-side device is provided, including a processor and a communication interface, where the communication interface is configured to: receive eighth information from a fourth base station, where the eighth information includes second data collection assistance information, and the second data collection assistance information is data collection assistance information for representing a data collection preference or data collection status of a second terminal; where the second terminal is a terminal that needs to establish a connection to the first base station.

According to a twelfth aspect, a readable storage medium is provided, where a program or instructions are stored on the readable storage medium, and the program or instructions, when executed by a processor, implement the steps of the method according to the first aspect, or implement the steps of the method according to the second aspect, or implement the steps of the method according to the third aspect.

According to a thirteenth aspect, a wireless communication system is provided, including: a terminal and a network-side device, where the terminal may be configured to perform the steps of the method according to the first aspect, and the network-side device may be configured to perform the steps of the method according to the second aspect; or the terminal may be configured to perform the steps of the method according to the first aspect, and the network-side device may be configured to perform the steps of the method according to the third aspect.

According to a fourteenth aspect, a chip is provided. The chip includes a processor and a communication interface, where the communication interface is coupled to the processor, and the processor is configured to run a program or instructions to implement the method according to the first aspect, or implement the method according to the second aspect, or implement the method according to the third aspect.

According to a fifteenth aspect, a computer program/program product is provided, where the computer program/program product is stored in a storage medium, and the program/program product is executed by at least one processor to implement the steps of the information transmission method according to the first aspect, or implement the steps of the information transmission method according to the second aspect, or implement the steps of the information transmission method according to the third aspect.

In the embodiments of this application, a terminal receives first information from a base station, where the first information includes first configuration information, the first configuration information is configuration information for indicating reporting of data collection assistance information, and the data collection assistance information is assistance information for representing a data collection preference or a data collection status; and the terminal sends second information to the base station, where the second information includes first data collection assistance information, and the first data collection assistance information is data collection assistance information for representing the data collection preference or data collection status of the terminal. In this way, during a subsequent data collection process, the terminal can perform moderate data collection based on the reported data collection assistance information, thereby reducing the consumption of the terminal in data collection.

### BRIEF DESCRIPTION OF DRAWINGS

FIG. 1 is a schematic diagram of a network structure to which embodiments of this application are applicable;
FIG. 2 is a schematic diagram of an AI/ML architecture in the related art;
FIG. 3 is a flowchart of an information transmission method according to an embodiment of this application;
FIG. 4 is a flowchart of another information transmission method according to an embodiment of this application;
FIG. 5 is a flowchart of another information transmission method according to an embodiment of this application;
FIG. 6 is a flowchart of a terminal reporting data collection assistance information according to an embodiment of this application;
FIG. 7 is a structural diagram of an information transmission apparatus according to an embodiment of this application;
FIG. 8 is a structural diagram of another information transmission apparatus according to an embodiment of this application;
FIG. 9 is a structural diagram of another information transmission apparatus according to an embodiment of this application;
FIG. 10 is a structural diagram of a communication device according to an embodiment of this application;
FIG. 11 is a structural diagram of a terminal according to an embodiment of this application; and
FIG. 12 is a structural diagram of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, objects distinguished by "first" and "second" are generally of a same type, and the quantities of the objects are not limited, for example, there may be one or more first objects. In addition, "or" in this application represents at least one of connected objects. For example, "A or B" covers three schemes, that is, scheme 1: including A and not including B; scheme 2: including B and not including A; and scheme 3: including both A and B. The character "/" generally indicates that the associated objects have an "or" relationship.

The term "indication" in this application may be a direct indication (or explicit indication) or an indirect indication (or implicit indication). A direct indication may be understood as a sender explicitly informing a receiver of content such as specific information, an operation to be performed, or a request result in a sent indication; an indirect indication may be understood as a receiver determining corresponding information based on an indication sent by a sender, or making a judgment and determining an operation to be performed, a request result, or the like based on a judgment result.

It should be noted that technologies described in the embodiments of this application are not limited to a long term evolution (Long Term Evolution, LTE)/LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" are often used interchangeably in the embodiments of this application. The technologies described may be used in the above-mentioned systems and radio technologies as well as other systems and radio technologies. In the following descriptions, a new radio (New Radio, NR) system is described for illustration purpose, and NR terms are used in most of the following descriptions, although these technologies may also be applied to other systems than an NR system, for example, a 6^{th} generation (6^{th} Generation, 6G) communication system.

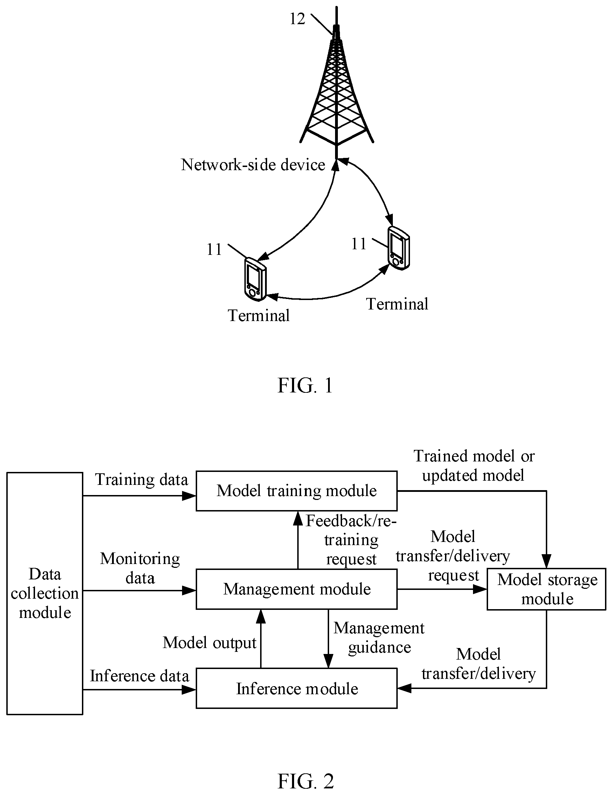

FIG. 1 is a block diagram of a wireless communication system to which embodiments of this application are applicable. The wireless communication system includes a terminal 11 and a network-side device 12. The terminal 11 may be a terminal-side device such as a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile internet device (Mobile Internet Device, MID), an augmented reality (Augmented Reality, AR) or virtual reality (Virtual Reality, VR) device, a robot, a wearable device (Wearable Device), a flight vehicle (flight vehicle), vehicle user equipment (Vehicle User Equipment, VUE), ship-borne equipment, pedestrian user equipment (Pedestrian User Equipment, PUE), smart household (home devices with wireless communication functions, such as refrigerators, televisions, washing machines, or furniture), a game console, a personal computer (Personal Computer, PC), a teller machine, or a self-service machine. The wearable device includes a smartwatch, a smart band, smart earphones, smart glasses, smart jewelry (a smart bangle, a smart bracelet, a smart ring, a smart necklace, a smart leglet, a smart anklet, and the like), a smart wristband, smart clothing, or the like. The vehicle user equipment may also be referred to as an in-vehicle terminal, an in-vehicle controller, an in-vehicle module, an in-vehicle component, an in-vehicle chip, an in-vehicle unit, and the like. It should be noted that the terminal 11 is not limited to a specific type in the embodiments of this application. The network-side device 12 may include an access network device or a core network device. The access network device may also be referred to as a radio access network (Radio Access Network, RAN) device, a wireless access network function, or a wireless access network unit. The access network device may include a base station, a wireless local area network (Wireless Local Area Network, WLAN) access point (Access Point, AP), a wireless fidelity (Wireless Fidelity, Wi-Fi) node, or the like. The base station may be referred to as a NodeB (Node B, NB), an evolved NodeB (Evolved Node B, eNB), a next generation NodeB (the next generation Node B, gNB), a new radio NodeB (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home NodeB (home Node B, HNB), a home evolved NodeB (home evolved Node B), a transmission reception point (Transmission Reception Point, TRP), or other suitable terms in the field. Provided that the same technical effect is achieved, the base station is not limited to specific technical terms. It should be noted that in the embodiments of this application, only the base station in the NR system is used as an example for description, but a specific type of the base station is not limited.

Before the embodiments of this application are described, the following briefly describes the related art.

### I. AI/ML architecture and data collection

FIG. 2 shows an AI/ML architecture studied in the air interface AI project of 3rd generation partnership project (3rd Generation Partnership Project, 3GPP) release 18 (Release 18, R18). As shown in FIG. 2, the AI/ML architecture includes the following modules.

Data collection (Data Collection) module: is responsible for providing input data to a model training module, a management module, and an inference module; for example, providing training data (Training Data) to the model training module, providing monitoring data (Monitoring Data) to the management module, and providing inference data (Inference Data) to the inference module.

Model training (Model Training) module: is responsible for performing training, validation, and testing of AI/ML models, and also responsible for data preparation, that is, data preprocessing, to convert data into a specific format, and the like.

Management (Management) module: is responsible for model selection, activation, deactivation, transfer (Model Transfer), delivery (Model Delivery), fallback, and the like.

Inference (Inference) module: is responsible for obtaining corresponding model output (Inference Output) after model input is applied to an AI/ML model or an AI/ML functionality.

Model storage (Model Storage) module: is responsible for saving a trained or updated model (Trained/Updated Model).

For data collection used for model training, there may be the following solutions:
Solution 1: gNB-side data collection. This solution is implemented based on layer 3 signaling. In this solution, a gNB configures a terminal to perform data collection, and the terminal sends collected data to the gNB.
Solution 2: Operations, administration and maintenance (Operations, Administration and Maintenance, OAM)-side data collection. This solution is implemented based on minimization of drive test (Minimization of Drive-Test, MDT). In this solution, an OAM configures, through a gNB, a terminal to perform data collection, and data collected by the terminal is first sent to the base station, and then sent to the OAM by the base station.
Solution 3: Location management function (Location Management Function, LMF)-side data collection. This solution is implemented based on LTE positioning protocol (LTE Positioning Protocol, LPP)/NR positioning protocol A (NR positioning protocol A, NRPPa). In this solution, an LMF configures a terminal and a base station to perform data collection; and the terminal first sends collected data to the base station, the base station sends the data to an access and mobility management function (Access and Mobility Management Function, AMF), and the AMF then sends the data to the LMF.

### II. Minimization of drive test MDT

To ensure network quality, operators need to use drive test (Drive Tests) technology to test network quality. A traditional drive test method requires an operator to deploy dedicated personnel using specialized instruments to test the signal quality at various locations in an actual network to check for network coverage issues. However, this method consumes substantial manpower and material resources. Moreover, as the drive test personnel generally cannot easily access all locations to test network signal quality, the actual effect of this method may not be very good. To solve this problem, 3GPP has proposed MDT technology. This technical solution is characterized by directly using user equipment (User Equipment, UE) in a network to measure and report network coverage. This technical solution directly leverages users to test network coverage, reducing substantial manpower and material resource expenditures for operators. Moreover, all locations accessible to users in the network can be covered, achieving more effective coverage than traditional drive test methods.

MDT technology has advantages such as low overhead and short optimization cycle, thereby greatly reducing the network optimization and maintenance costs for mobile communication operators and improving the network optimization efficiency. Moreover, MDT technology can collect network information from locations inaccessible to traditional drive tests (such as indoors, and narrow roads). Therefore, MDT technology can provide stronger support for evaluating network performance and improving network quality, thereby bringing higher satisfaction to users.

From the perspective of MDT measurement methods, MDT may be classified into immediate MDT (Immediate MDT) and logged MDT (Logged MDT).

The immediate MDT is characterized in that a UE performs a measurement in a radio resource control (Radio Resource Control, RRC) connected status by reusing existing radio resource management (Radio Resource Management, RRM) measurements specified in protocols. If a configured reporting condition is met, the UE reports an MDT measurement result to a base station. When the UE is handed over to another cell or enters an RRC idle status, the configured MDT measurement is deleted.

The logged MDT is characterized in that a base station configures a logged MDT measurement for a UE when the UE is in an RRC connected status. The UE can perform a measurement and record a measurement result only in an RRC idle (idle) status/inactive (inactive) status. The UE can report the result to the base station only after returning to the RRC connected status. Once configured, the logged MDT measurement continues until the configured duration is reached.

From the perspective of MDT collection objects, MDT may be classified into management-based MDT (management-based MDT) and signaling-based MDT (Signaling-based MDT).

The management-based MDT is to collect MDT data of UEs in a specific area (such as a tracking area or a cell), where MDT requests and configurations are directly sent from an OAM to a base station.

The signaling-based MDT is to collect MDT data of a specific UE, where a base station can specify the UE through a user identifier/device identifier.

The data collection solutions (such as MDT) in the related art have certain impacts on the storage and power consumption of a terminal. With the deployment of the AI/ML functionality, a network has a further increasing demand for data collection by the terminal. It is necessary to consider how to reduce a data collection volume for a single terminal, thereby reducing the consumption of a single terminal in data collection.

In view of this, embodiments of this application provide an information transmission method, an information transmission apparatus, and a communication device, so as to solve the problem of substantial consumption of a terminal in data collection.

This application defines the following terms:
Data collection assistance information: assistance information (Assistance Information) related to data collection, used to represent a data collection preference or a data collection status.

Data collection assistance information configuration: configuration information related to data collection assistance information, used to indicate (or configure) a terminal to report (or feed back) data collection assistance information.

The following describes an information transmission method according to the embodiments of this application in detail below with reference to the accompanying drawings through some embodiments and application scenarios thereof.

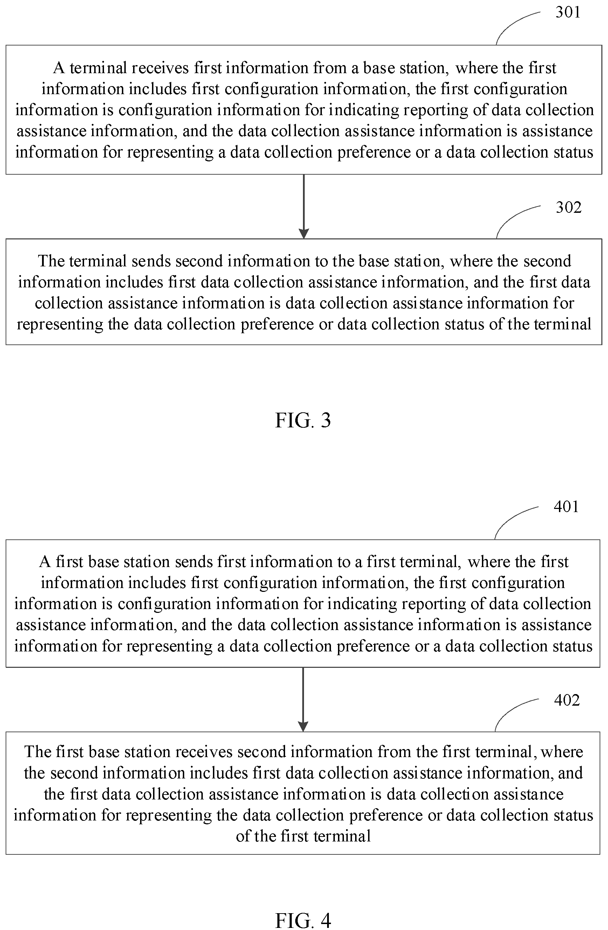

FIG. 3 is a flowchart of an information transmission method according to an embodiment of this application. As shown in FIG. 3, the information transmission method includes the following steps.

Step 301: A terminal receives first information from a base station, where the first information includes first configuration information, the first configuration information is configuration information for indicating reporting of data collection assistance information, and the data collection assistance information is assistance information for representing a data collection preference or a data collection status.

Step 302: The terminal sends second information to the base station, where the second information includes first data collection assistance information, and the first data collection assistance information is data collection assistance information for representing the data collection preference or data collection status of the terminal.

In the embodiments of this application, the base station may be understood as a serving base station of the terminal. The first configuration information may be understood as data collection assistance information configuration, used to indicate (or configure) the terminal to report (or feed back) the data collection assistance information.

After receiving the first configuration information, the terminal may send the data collection assistance information (that is, the first data collection assistance information) to the base station to represent the data collection preference or data collection status of the terminal.

For the terminal, during a subsequent data collection process, moderate data collection may be performed based on the reported data collection assistance information, to reduce the consumption of the terminal in data collection.

For the base station, during a subsequent data collection configuration process and data acquisition process, the data collection assistance information reported by the terminal may be taken into account. That is, by taking into account the data collection preference or data collection status of the terminal, moderate data collection configuration and data acquisition are performed on the terminal, to reduce the consumption of the terminal in data collection. This can prevent the base station from performing a large amount or frequent data collection and data reporting on a single terminal.

In the embodiments of this application, a terminal receives first information from a base station, where the first information includes first configuration information, the first configuration information is configuration information for indicating reporting of data collection assistance information, and the data collection assistance information is assistance information for representing a data collection preference or a data collection status; and the terminal sends second information to the base station, where the second information includes first data collection assistance information, and the first data collection assistance information is data collection assistance information for representing the data collection preference or data collection status of the terminal. In this way, during a subsequent data collection process, the terminal can perform moderate data collection based on the reported data collection assistance information, thereby reducing the consumption of the terminal in data collection.

For example, in a case that the base station has a data collection requirement, for example, the base station receives an MDT collection requirement from an OAM, or the base station itself has a data collection requirement, the base station sends data collection assistance information configuration (that is, the first configuration information) to the terminal.

For example, the first information may be carried through a first message, where the first message is a data collection request message. In other words, the data collection assistance information configuration may be carried through the data collection request message.

For example, in a case that the base station has a data collection requirement, it sends a data collection request message to the terminal, having the data collection assistance information configuration carried in the data collection request message. In addition to carrying the data collection assistance information configuration, the data collection request message may also carry data collection configuration.

The data collection request message carries the data collection assistance information configuration and the data collection configuration, meaning that two configurations are carried through one message. This can reduce the number of signaling interactions between the terminal and the base station, thereby moderately reducing communication overhead.

For example, the second information may be carried through any one of the following messages:
a second message, where the second message is a data collection response (MeasurementReport) message; and
a third message, where the third message is a UE assistance information (UEAssistanceInformation) message.

That is, the data collection assistance information may be carried through the MeasurementReport message, or carried through the UEAssistanceInformation message.

The MeasurementReport message may be understood as a response message to the data collection request. Having the data collection assistance information carried in the MeasurementReport message can reduce the number of signaling interactions between the terminal and the base station, thereby moderately reducing communication overhead.

In some embodiments, before the terminal receives the first information from the base station, the method further includes:
sending, by the terminal, third information to the base station, where the third information is used to indicate that the terminal supports a target capability, and the target capability is a capability to report the data collection assistance information.

The terminal may perform capability interaction with the base station and report capability information of the terminal to the base station.

In this implementation, during the capability interaction process, by sending the third information, the terminal may inform the base station that it supports (or has) the capability (that is, a target capability) to report data collection assistance information. Herein, the capability may also be understood as or replaced by a function.

That is, the base station sends configuration information related to the data collection assistance information to the terminal only in a case that it is determined that the terminal supports reporting of data collection assistance information. This can prevent the base station from sending related configuration information to a terminal that does not support reporting of data collection assistance information, thereby avoiding unnecessary communication overhead.

In some embodiments, the first configuration information includes at least one of the following:
a first indication, used to indicate establishment of the first configuration information;
a data collection identifier, where data corresponding to the data collection identifier is data allowed for reporting of the data collection assistance information;
a data collection list, where data corresponding to the data collection list is data allowed for reporting of the data collection assistance information; and
a target threshold, where the target threshold is used to determine a storage status.

For example, the first indication may be a 1-bit (bit) indication, such as "1" or "true".

For example, the target threshold is used to determine whether the storage space is in a full status or is in an insufficient status. It should be noted that the target threshold may be pre-agreed upon by a protocol in addition to being configured by the base station.

That data corresponding to the data collection identifier is data allowed for reporting of the data collection assistance information may be understood as: the terminal may report the data collection assistance information for the data corresponding to the data collection identifier. In other words, the terminal may selectively collect the data corresponding to the data collection identifier. For example, the terminal may choose to collect, not to collect, to collect less, or to delay the collection of the data corresponding to the data collection identifier.

That data corresponding to the data collection list is data allowed for reporting of the data collection assistance information may be understood as: the terminal may report the data collection assistance information for the data corresponding to the data collection list. In other words, the terminal may selectively collect the data corresponding to the data collection list. For example, the terminal may choose to collect, not to collect, to collect less, or delay the collection of the data corresponding to the data collection list.

It should be noted that in a case that the first configuration information includes a data collection identifier (or a data collection list), it indicates that the base station supports the terminal in reporting the data collection assistance information for the data collection identifier (or the data collection list). In a case that the first configuration information does not include any data collection identifier (or data collection list), it may be understood that the base station does not limit a type of data for which the terminal reports the data collection assistance information, and the terminal may report the data collection assistance information based on its own requirement.

Optionally, the data collection identifier includes at least one of the following:
a first identifier, used to indicate a corresponding measurement service, where the first identifier may be, for example, MeasId;
a second identifier, used to indicate a corresponding measurement object, where the second identifier may be, for example, MeasObjectId, and the measurement object may be, for example, a measurement frequency point;
a third identifier, used to indicate a corresponding measurement report configuration, where the third identifier may be, for example, ReportConfigId, and the measurement report configuration may be, for example, a reporting period configuration for measurement reports;
a fourth identifier, used to indicate a corresponding measurement parameter, where the measurement parameter may be, for example, a reference signal received power (Reference Signal Received Power, RSRP), a signal to interference plus noise ratio (Signal to Interference plus Noise Ratio, SINR), or a reference signal received quality (Reference Signal Received Quality, RSRQ);
a fifth identifier, used to indicate a corresponding measurement reference signal, where the measurement reference signal may be, for example, a synchronization signal block (Synchronization Signal Block, SSB), a channel status information-reference signal (Channel Status Information-Reference Signal, CSI-RS), or a positioning reference signal (Positioning Reference Signal, PRS); and
a sixth identifier, used to indicate a corresponding AI functionality, where the AI functionality may be, for example, a beam prediction (beam prediction) function, a positioning (positioning) function, or a mobility optimization (mobility) function.

Optionally, the data collection list includes at least one of the following:
a first list, including information about a measurement service;
a second list, including information about a measurement object;
a third list, including information about a measurement report configuration;
a fourth list, including information about a measurement parameter;
a fifth list, including information about a measurement reference signal; and
a sixth list, including information about an AI functionality.

In some embodiments, the first data collection assistance information includes at least one of the following:
information about a first timer, used to indicate that before the first timer expires, the terminal does not expect to receive a data collection request, or ignores a received data collection request;
a first data collection assistance information identifier associated with the first timer, used to indicate that before the first timer expires, the terminal does not expect to receive a data collection request corresponding to the first data collection assistance information identifier, or ignores a received data collection request corresponding to the first data collection assistance information identifier;
a first data collection assistance information list associated with the first timer, used to indicate that before the first timer expires, the terminal does not expect to receive a data collection request corresponding to the first data collection assistance information list, or ignores a received data collection request corresponding to the first data collection assistance information list; and
a second indication, used to indicate that a first storage space of the terminal reaches a preset status, where the first storage space is a space for storing data collected by the terminal.

The first timer may be understood as data collection assistance information representing the data collection preference of the terminal. By reporting the first timer, the terminal does not need to perform data collection or data reporting within a validity period of the first timer, thereby reducing the consumption of the terminal in data collection.

The second indication may be understood as data collection assistance information representing the data collection status of the terminal. By reporting the second indication, the terminal can inform the base station that the terminal cannot collect more data. In this way, the base station does not send a data collection request to the terminal within a period of time, thereby reducing the consumption of the terminal in data collection.

For example, the second indication may be a 1-bit indication, such as "1" or "true".

It should be noted that in a case that the first data collection assistance information does not include any data collection assistance information identifier (or data collection assistance information list), the first timer is suitable for any data collection.

It should be noted that if the data collection assistance information configuration (that is, the first configuration information) sent by the base station includes a data collection identifier (or a data collection list), the data collection assistance information (that is, the first data collection assistance information) reported by the terminal may not include a data collection assistance information identifier (or a data collection assistance information list).

Optionally, the first data collection assistance information identifier includes at least one of the following:
a seventh identifier, where a measurement service corresponding to the seventh identifier is associated with the first timer, where the seventh identifier may be, for example, MeasId;
an eighth identifier, where a measurement object corresponding to the eighth identifier is associated with the first timer, where the eighth identifier may be, for example, MeasObjectId;
a ninth identifier, where a measurement report configuration corresponding to the ninth identifier is associated with the first timer, where the ninth identifier may be, for example, ReportConfigId;
a tenth identifier, where a measurement parameter corresponding to the tenth identifier is associated with the first timer;
an eleventh identifier, where a measurement reference signal corresponding to the eleventh identifier is associated with the first timer; and
a twelfth identifier, where an AI functionality corresponding to the twelfth identifier is associated with the first timer.

Optionally, the first data collection assistance information list includes at least one of the following:
a seventh list, where a measurement service corresponding to measurement service information in the seventh list is associated with the first timer;
an eighth list, where a measurement object corresponding to measurement object information in the eighth list is associated with the first timer;
a ninth list, where a measurement report configuration corresponding to measurement report configuration information in the ninth list is associated with the first timer;
a tenth list, where a measurement parameter corresponding to measurement parameter information in the tenth list is associated with the first timer;
an eleventh list, where a measurement reference signal corresponding to measurement reference signal information in the eleventh list is associated with the first timer; and
a twelfth list, where an AI functionality corresponding to AI functionality information in the twelfth list is associated with the first timer.

In some embodiments, the method further includes:
determining, by the terminal based on a target threshold, whether the first storage space reaches the preset status; where
the target threshold is used for the terminal to determine the storage status, and the target threshold is agreed upon by a protocol or configured by the base station.

Optionally, the preset status is used to represent that the first storage space is in a full status or an insufficient status; and
the determining, by the terminal based on a target threshold, whether the first storage space reaches the preset status includes at least one of the following:
in a case that a used proportion of the first storage space is higher than the target threshold, determining, by the terminal, that the first storage space reaches the preset status; and
in a case that a remaining space proportion of the first storage space is lower than the target threshold, determining, by the terminal, that the first storage space reaches the preset status.

In some embodiments, the method further includes:
in a case that the first storage space reaches the preset status, releasing, by the terminal, second configuration information, or stopping collecting, by the terminal, data corresponding to second configuration information, or stopping storing, by the terminal, data corresponding to second configuration information; where
the second configuration information is configuration information related to data collection.

That is, after the first storage space of the terminal is full, the terminal may release the data collection configuration (that is, the second configuration information), for example, the data collection configuration carried in the data collection request message. The terminal releasing the second configuration information means that the terminal stops collecting the data corresponding to the second configuration information, or stops storing the data corresponding to the second configuration information. The terminal may alternatively not release the second configuration information, and in this case, the terminal stops collecting the data corresponding to the second configuration information, or stops storing the data corresponding to the second configuration information.

This implementation can reduce the consumption of the terminal in data collection.

In some embodiments, the method further includes:
receiving, by the terminal, fourth information from the base station, where the fourth information is used to request reporting of data; and
reporting, by the terminal to the base station, data in the first storage space.

That is, in a case that the second indication sent by the terminal is received, the base station may send the fourth information to the terminal to request the terminal to report data.

For example, the fourth information may be carried through a terminal information request (UEInformationRequest) message or a terminal information response (UEInformationResponse) message.

Additionally, after reporting the data in the first storage space to the base station, the terminal may release the first storage space.

In some embodiments, the method further includes:
receiving, by the terminal, fifth information from the base station, where the fifth information is used to indicate release of the first configuration information; and
releasing, by the terminal, the first configuration information, or stopping collecting, by the terminal, data corresponding to the first configuration information, or stopping storing, by the terminal, data corresponding to the first configuration information.

For example, after the base station completes data collection, or after the base station no longer has a collection requirement for the data corresponding to the first configuration information, the base station may send the fifth information to the terminal.

After the fifth information is received, the terminal may release the first configuration information, or may stop collecting the data corresponding to the first configuration information, or stop storing the data corresponding to the first configuration information. This can reduce the consumption of the terminal in data collection.

It should be noted that after the first configuration information is received, if the base station does not indicate release of the first configuration information, the terminal may send the data collection assistance information multiple times. For example, when a power saving requirement of the terminal changes, the terminal may send new data collection assistance information. Therefore, it can be understood that after the terminal releases the first configuration information, the terminal no longer reports the corresponding data collection assistance information.

The above are method embodiments on the terminal side. The following describes method embodiments on the base station side.

The embodiments of this application relate to a solution in which a base station receives data collection assistance information from a terminal, and also relate to a solution in which a base station receives data collection assistance information from another base station. In other words, a source of the data collection assistance information received by the base station may be a terminal or another base station. The following describes the solution in which a base station receives data collection assistance information from a terminal.

FIG. 4 is a flowchart of an information transmission method according to an embodiment of this application. As shown in FIG. 4, the information transmission method includes the following steps.

Step 401: A first base station sends first information to a first terminal, where the first information includes first configuration information, the first configuration information is configuration information for indicating reporting of data collection assistance information, and the data collection assistance information is assistance information for representing a data collection preference or a data collection status.

Step 402: The first base station receives second information from the first terminal, where the second information includes first data collection assistance information, and the first data collection assistance information is data collection assistance information for representing the data collection preference or data collection status of the first terminal.

In the embodiments of this application, the first base station receives the first data collection assistance information from the first terminal.

For the first terminal, the first base station is a source base station (or referred to as a serving base station) of the first terminal.

In some embodiments, before the first base station sends the first information to the first terminal, the method further includes:
receiving, by the first base station, third information from the first terminal, where the third information is used to indicate that the first terminal supports a target capability, and the target capability is a capability to report the data collection assistance information.

In some embodiments, the first configuration information includes at least one of the following:
a first indication, used to indicate establishment of the first configuration information;
a data collection identifier, where data corresponding to the data collection identifier is data allowed for reporting of the data collection assistance information;
a data collection list, where data corresponding to the data collection list is data allowed for reporting of the data collection assistance information; and
a target threshold, where the target threshold is used to determine a storage status.

Optionally, the data collection identifier includes at least one of the following:
a first identifier, used to indicate a corresponding measurement service;
a second identifier, used to indicate a corresponding measurement object;
a third identifier, used to indicate a corresponding measurement report configuration;
a fourth identifier, used to indicate a corresponding measurement parameter;
a fifth identifier, used to indicate a corresponding measurement reference signal; and
a sixth identifier, used to indicate a corresponding artificial intelligence AI functionality.

Optionally, the data collection list includes at least one of the following:
a first list, including information about a measurement service;
a second list, including information about a measurement object;
a third list, including information about a measurement report configuration;
a fourth list, including information about a measurement parameter;
a fifth list, including information about a measurement reference signal; and
a sixth list, including information about an AI functionality.

In some embodiments, the first data collection assistance information includes at least one of the following:
information about a first timer, used to indicate that before the first timer expires, the first terminal does not expect to receive a data collection request, or ignores a received data collection request;
a first data collection assistance information identifier associated with the first timer, used to indicate that before the first timer expires, the first terminal does not expect to receive a data collection request corresponding to the first data collection assistance information identifier, or ignores a received data collection request corresponding to the first data collection assistance information identifier;
a first data collection assistance information list associated with the first timer, used to indicate that before the first timer expires, the first terminal does not expect to receive a data collection request corresponding to the first data collection assistance information list, or ignores a received data collection request corresponding to the first data collection assistance information list; and
a second indication, used to indicate that a first storage space of the first terminal reaches a preset status, where the first storage space is a space for storing data collected by the first terminal.

Optionally, the first data collection assistance information identifier includes at least one of the following:
a seventh identifier, where a measurement service corresponding to the seventh identifier is associated with the first timer;
an eighth identifier, where a measurement object corresponding to the eighth identifier is associated with the first timer;
a ninth identifier, where a measurement report configuration corresponding to the ninth identifier is associated with the first timer;
a tenth identifier, where a measurement parameter corresponding to the tenth identifier is associated with the first timer;
an eleventh identifier, where a measurement reference signal corresponding to the eleventh identifier is associated with the first timer; and
a twelfth identifier, where an AI functionality corresponding to the twelfth identifier is associated with the first timer.

Optionally, the first data collection assistance information list includes at least one of the following:
a seventh list, where a measurement service corresponding to measurement service information in the seventh list is associated with the first timer;
an eighth list, where a measurement object corresponding to measurement object information in the eighth list is associated with the first timer;
a ninth list, where a measurement report configuration corresponding to measurement report configuration information in the ninth list is associated with the first timer;
a tenth list, where a measurement parameter corresponding to measurement parameter information in the tenth list is associated with the first timer;
an eleventh list, where a measurement reference signal corresponding to measurement reference signal information in the eleventh list is associated with the first timer; and
a twelfth list, where an AI functionality corresponding to AI functionality information in the twelfth list is associated with the first timer.

In some embodiments, the method further includes at least one of the following:
in a case that the first data collection assistance information includes the information about the first timer, stopping sending, by the first base station, a data collection request to the first terminal before the first timer expires;
in a case that the first data collection assistance information includes the information about the first timer and includes the first data collection assistance information identifier, stopping sending, by the first base station, a data collection request corresponding to the first data collection assistance information identifier to the first terminal before the first timer expires; and
in a case that the first data collection assistance information includes the information about the first timer and includes the first data collection assistance information list, stopping sending, by the first base station, a data collection request corresponding to the first data collection assistance information list to the first terminal before the first timer expires.

That is, during a data collection configuration process and a data acquisition process, the first base station takes into account the first data collection assistance information reported by the first terminal. That is, by taking into account the data collection preference or data collection status of the first terminal, the first base station performs moderate data collection configuration and data acquisition on the first terminal, thereby reducing the consumption of the first terminal in data collection. This can prevent the first base station from performing a large amount or frequent data collection and data reporting on the first terminal.

In some embodiments, the method further includes:
in a case that the first data collection assistance information includes the second indication, sending, by the first base station, fourth information to the first terminal, where the fourth information is used to request reporting of data.

In some embodiments, the method further includes:
sending, by the first base station, fifth information to the first terminal, where the fifth information is used to indicate release of the first configuration information.

The embodiments of this application further relate to exchange of data collection assistance information between base stations. The following describes multiple scenarios for exchange of data collection assistance information between base stations.

In some embodiments, the method further includes:
in a case that the first terminal needs to hand over to a target cell, if the first timer has not expired or the first terminal has not completed data reporting, sending, by the first base station, sixth information to a second base station, where the sixth information includes the first data collection assistance information, and the second base station is a base station corresponding to the target cell.

This implementation is applicable to a scenario of handover in an RRC connected status (RRC_CONNECTED).

After the first terminal reports the first data collection assistance information, before the first timer expires or before the first terminal completes data reporting, if the first terminal performs a handover, a source base station (that is, the first base station) may have the first data collection assistance information carried in a handover request.

In this way, during a subsequent data collection configuration process and data acquisition process, a new base station (that is, the second base station) may perform, by taking into account the first data collection assistance information sent by the first base station, moderate data collection configuration and data acquisition on the first terminal. This can prevent the new base station from performing a large amount or frequent data collection and data reporting on the first terminal.

Moreover, the first terminal no longer needs to send the same data collection assistance information to the new base station, thereby moderately reducing communication overhead of the first terminal.

In some embodiments, the method further includes:
in a case that the first terminal enters an inactive status, if the first timer has not expired or the first terminal has not completed data reporting, maintaining, by the first base station, the first data collection assistance information.

This implementation is applicable to a scenario of an RRC inactive status (RRC_INACTIVE).

After the first terminal reports the first data collection assistance information, before the first timer expires or before the first terminal completes data reporting, if the first terminal enters an inactive status, a source base station (that is, the first base station) maintains the first data collection assistance information, keeping the first data collection assistance information in a valid status.

For example, maintaining the first data collection assistance information includes maintaining the first timer.

In some embodiments, the method further includes:
in a case that the first terminal initiates a connection resume request, if the first timer has not expired or the first terminal has not completed data reporting, sending, by the first base station, seventh information to a third base station, where the seventh information includes the first data collection assistance information, and the third base station is a base station corresponding to the connection resume request.

This implementation is applicable to a scenario of connection resume in an RRC inactive status.

After the first terminal reports the first data collection assistance information, before the first timer expires or before the first terminal completes data reporting, if the first terminal initiates a connection resume (RRC resume), a source base station may send the first data collection assistance information to a target base station (that is, the third base station) through a terminal context feedback (RETRIEVE UE CONTEXT RESPONSE) message.

In this way, during a subsequent data collection configuration process and data acquisition process, a new base station (that is, the third base station) may perform, by taking into account the first data collection assistance information sent by the first base station, moderate data collection configuration and data acquisition on the first terminal. This can prevent the new base station from performing a large amount or frequent data collection and data reporting on the first terminal.

Moreover, the first terminal no longer needs to send the same data collection assistance information to the new base station, thereby moderately reducing communication overhead of the first terminal.

Optionally, in the method, the first information is carried through a first message, where the first message is a data collection request message.

Optionally, in the method, the second information is carried through any one of the following messages:
a second message, where the second message is a data collection response MeasurementReport message; and
a third message, where the third message is a UE assistance information UEAssistanceInformation message.

For related descriptions of the embodiment of this application, reference may be made to related descriptions of the method embodiment in FIG. 3, and the same technical effects can be achieved. To avoid repetition, details are not described herein again.

The following describes the solution in which a base station receives data collection assistance information from another base station.

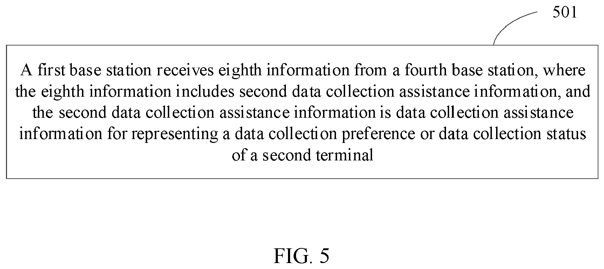

FIG. 5 is a flowchart of an information transmission method according to an embodiment of this application. As shown in FIG. 5, the information transmission method includes the following step.

Step 501: A first base station receives eighth information from a fourth base station, where the eighth information includes second data collection assistance information, and the second data collection assistance information is data collection assistance information for representing a data collection preference or data collection status of a second terminal.

The second terminal is a terminal that needs to establish a connection to the first base station.

In the embodiment of this application, the first base station receives the second data collection assistance information from the fourth base station, that is, data collection assistance information is exchanged between base stations.

For the second terminal, the fourth base station is a source base station of the second terminal, and the first base station is a target base station of the second terminal, that is, a new base station of the second terminal.

In some embodiments, the second data collection assistance information includes at least one of the following:
information about a second timer, used to indicate that before the second timer expires, the second terminal does not expect to receive a data collection request, or ignores a received data collection request;
a second data collection assistance information identifier associated with the second timer, used to indicate that before the second timer expires, the second terminal does not expect to receive a data collection request corresponding to the second data collection assistance information identifier, or ignores a received data collection request corresponding to the second data collection assistance information identifier;
a second data collection assistance information list associated with the second timer, used to indicate that before the second timer expires, the second terminal does not expect to receive a data collection request corresponding to the second data collection assistance information list, or ignores a received data collection request corresponding to the second data collection assistance information list; and
a third indication, used to indicate that a second storage space of the second terminal reaches a preset status, where the second storage space is a space for storing data collected by the second terminal.

Optionally, the second data collection assistance information identifier includes at least one of the following:
a thirteenth identifier, where a measurement service corresponding to the thirteenth identifier is associated with the second timer;
a fourteenth identifier, where a measurement object corresponding to the fourteenth identifier is associated with the second timer;
a fifteenth identifier, where a measurement report configuration corresponding to the fifteenth identifier is associated with the second timer;
a sixteenth identifier, where a measurement parameter corresponding to the sixteenth identifier is associated with the second timer;
a seventeenth identifier, where a measurement reference signal corresponding to the seventeenth identifier is associated with the second timer; and
an eighteenth identifier, where an AI functionality corresponding to the eighteenth identifier is associated with the second timer.

Optionally, the second data collection assistance information list includes at least one of the following:
a thirteenth list, where a measurement service corresponding to measurement service information in the thirteenth list is associated with the second timer;
a fourteenth list, where a measurement object corresponding to measurement object information in the fourteenth list is associated with the second timer;
a fifteenth list, where a measurement report configuration corresponding to measurement report configuration information in the fifteenth list is associated with the second timer;
a sixteenth list, where a measurement parameter corresponding to measurement parameter information in the sixteenth list is associated with the second timer;
a seventeenth list, where a measurement reference signal corresponding to measurement reference signal information in the seventeenth list is associated with the second timer; and
an eighteenth list, where an AI functionality corresponding to AI functionality information in the eighteenth list is associated with the second timer.

In some embodiments, the method further includes at least one of the following:
in a case that the second data collection assistance information includes the information about the second timer, stopping sending, by the first base station, a data collection request to the second terminal before the second timer expires;
in a case that the second data collection assistance information includes the information about the second timer and includes the second data collection assistance information identifier, stopping sending, by the first base station, a data collection request corresponding to the second data collection assistance information identifier to the second terminal before the second timer expires; and
in a case that the second data collection assistance information includes the information about the second timer and includes the second data collection assistance information list, stopping sending, by the first base station, a data collection request corresponding to the second data collection assistance information list to the second terminal before the second timer expires.

In some embodiments, the method further includes:
in a case that the second data collection assistance information includes the third indication, sending, by the first base station, ninth information to the second terminal, where the ninth information is used to request reporting of data.

For related descriptions of the embodiment of this application, reference may be made to related descriptions of the method embodiments in FIG. 3 and FIG. 4, and the same technical effects can be achieved. To avoid repetition, details are not described herein again.

The following provides specific embodiments to describe a solution in which a terminal reports data collection assistance information.

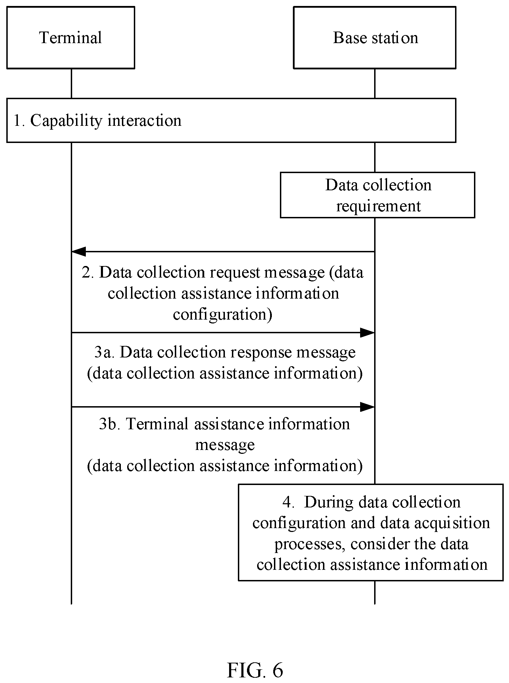

As shown in FIG. 6, the terminal reporting data collection assistance information includes the following steps.

Step 1: The terminal performs capability interaction with a base station, indicating that the terminal supports a data collection assistance information reporting capability (or referred to as a data collection assistance information reporting function).

Step 2: In a case that the base station has a data collection requirement, it sends a data collection request message to the terminal, where the data collection request message includes data collection assistance information configuration.

Step 3: The terminal reports data collection assistance information.

Step 3a: The terminal has the data collection assistance information carried through a data collection response message.

Step 3b: The terminal has the data collection assistance information carried through a UE assistance information message.

Step 4: The base station takes the data collection assistance information into account during a data collection configuration process and a data acquisition process.

In summary, in the embodiments of this application, through sending of the data collection assistance information, the terminal can perform moderate data collection, thereby reducing the consumption of the terminal in data collection.

The information transmission method according to the embodiments of this application may be executed by an information transmission apparatus. In the embodiments of this application, the information transmission method being executed by an information transmission apparatus is used as an example to describe an information transmission apparatus according to an embodiment of this application.

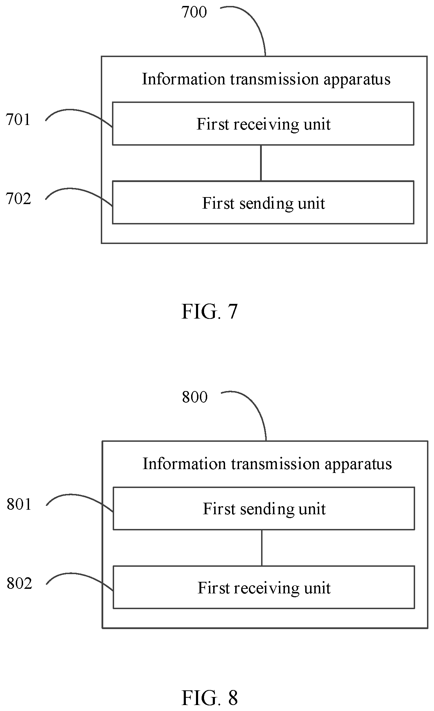

Referring to FIG. 7, an embodiment of this application further provides an information transmission apparatus which may be applied to a terminal. As shown in FIG. 7, the information transmission apparatus 700 includes:
a first receiving unit 701 configured to receive first information from a base station, where the first information includes first configuration information, the first configuration information is configuration information for indicating reporting of data collection assistance information, and the data collection assistance information is assistance information for representing a data collection preference or a data collection status; and
a first sending unit 702 configured to send second information to the base station, where the second information includes first data collection assistance information, and the first data collection assistance information is data collection assistance information for representing the data collection preference or data collection status of the terminal.

Optionally, the apparatus further includes:
a second sending unit configured to send third information to the base station, where the third information is used to indicate that the terminal supports a target capability, and the target capability is a capability to report the data collection assistance information.

Optionally, the first configuration information includes at least one of the following:
a first indication, used to indicate establishment of the first configuration information;
a data collection identifier, where data corresponding to the data collection identifier is data allowed for reporting of the data collection assistance information;
a data collection list, where data corresponding to the data collection list is data allowed for reporting of the data collection assistance information; and
a target threshold, where the target threshold is used to determine a storage status.

Optionally, the data collection identifier includes at least one of the following:
a first identifier, used to indicate a corresponding measurement service;
a second identifier, used to indicate a corresponding measurement object;
a third identifier, used to indicate a corresponding measurement report configuration;
a fourth identifier, used to indicate a corresponding measurement parameter;
a fifth identifier, used to indicate a corresponding measurement reference signal; and
a sixth identifier, used to indicate a corresponding artificial intelligence AI functionality.

Optionally, the data collection list includes at least one of the following:
a first list, including information about a measurement service;
a second list, including information about a measurement object;
a third list, including information about a measurement report configuration;
a fourth list, including information about a measurement parameter;
a fifth list, including information about a measurement reference signal; and
a sixth list, including information about an AI functionality.

Optionally, the first data collection assistance information includes at least one of the following:
information about a first timer, used to indicate that before the first timer expires, the terminal does not expect to receive a data collection request, or ignores a received data collection request;
a first data collection assistance information identifier associated with the first timer, used to indicate that before the first timer expires, the terminal does not expect to receive a data collection request corresponding to the first data collection assistance information identifier, or ignores a received data collection request corresponding to the first data collection assistance information identifier;
a first data collection assistance information list associated with the first timer, used to indicate that before the first timer expires, the terminal does not expect to receive a data collection request corresponding to the first data collection assistance information list, or ignores a received data collection request corresponding to the first data collection assistance information list; and
a second indication, used to indicate that a first storage space of the terminal reaches a preset status, where the first storage space is a space for storing data collected by the terminal.

Optionally, the first data collection assistance information identifier includes at least one of the following:
a seventh identifier, where a measurement service corresponding to the seventh identifier is associated with the first timer;
an eighth identifier, where a measurement object corresponding to the eighth identifier is associated with the first timer;
a ninth identifier, where a measurement report configuration corresponding to the ninth identifier is associated with the first timer;
a tenth identifier, where a measurement parameter corresponding to the tenth identifier is associated with the first timer;
an eleventh identifier, where a measurement reference signal corresponding to the eleventh identifier is associated with the first timer; and
a twelfth identifier, where an AI functionality corresponding to the twelfth identifier is associated with the first timer.

Optionally, the first data collection assistance information list includes at least one of the following:
a seventh list, where a measurement service corresponding to measurement service information in the seventh list is associated with the first timer;
an eighth list, where a measurement object corresponding to measurement object information in the eighth list is associated with the first timer;
a ninth list, where a measurement report configuration corresponding to measurement report configuration information in the ninth list is associated with the first timer;
a tenth list, where a measurement parameter corresponding to measurement parameter information in the tenth list is associated with the first timer;
an eleventh list, where a measurement reference signal corresponding to measurement reference signal information in the eleventh list is associated with the first timer; and
a twelfth list, where an AI functionality corresponding to AI functionality information in the twelfth list is associated with the first timer.

Optionally, the apparatus further includes:
a first processing unit configured to determine, based on a target threshold, whether the first storage space reaches the preset status; where
the target threshold is used for the terminal to determine the storage status, and the target threshold is agreed upon by a protocol or configured by the base station.

Optionally, the preset status is used to represent that the first storage space is in a full status or an insufficient status; and
the first processing unit is specifically configured to perform at least one of the following:
in a case that a used proportion of the first storage space is higher than the target threshold, determining that the first storage space reaches the preset status; and
in a case that a remaining space proportion of the first storage space is lower than the target threshold, determining that the first storage space reaches the preset status.

Optionally, the apparatus further includes:
a second processing unit configured to, in a case that the first storage space reaches the preset status, release, for the terminal, second configuration information, or stop collecting, for the terminal, data corresponding to second configuration information, or stop storing, for the terminal, data corresponding to second configuration information; where
the second configuration information is configuration information related to data collection.

Optionally, the apparatus further includes:
a second receiving unit configured to receive fourth information from the base station, where the fourth information is used to request reporting of data; and
a third sending unit configured to report data in the first storage space to the base station.

Optionally, the apparatus further includes:
a third receiving unit configured to receive fifth information from the base station, where the fifth information is used to indicate release of the first configuration information; and
a third processing unit configured to release the first configuration information, or stop collecting, for the terminal, data corresponding to the first configuration information, or stop storing, for the terminal, data corresponding to the first configuration information.

Optionally, the first information is carried through a first message, where the first message is a data collection request message.

Optionally, the second information is carried through any one of the following messages:
a second message, where the second message is a data collection response MeasurementReport message; and
a third message, where the third message is a UE assistance information UEAssistanceInformation message.

Referring to FIG. 8, an embodiment of this application further provides an information transmission apparatus which may be applied to a first base station. As shown in FIG. 8, the information transmission apparatus 800 includes:
a first sending unit 801 configured to send first information to a first terminal, where the first information includes first configuration information, the first configuration information is configuration information for indicating reporting of data collection assistance information, and the data collection assistance information is assistance information for representing a data collection preference or a data collection status; and
a first receiving unit 802 configured to receive second information from the first terminal, where the second information includes first data collection assistance information, and the first data collection assistance information is data collection assistance information for representing the data collection preference or data collection status of the first terminal.

Optionally, the apparatus further includes:
a second receiving unit configured to receive third information from the first terminal, where the third information is used to indicate that the first terminal supports a target capability, and the target capability is a capability to report the data collection assistance information.

Optionally, the first configuration information includes at least one of the following:
a first indication, used to indicate establishment of the first configuration information;
a data collection identifier, where data corresponding to the data collection identifier is data allowed for reporting of the data collection assistance information;
a data collection list, where data corresponding to the data collection list is data allowed for reporting of the data collection assistance information; and
a target threshold, where the target threshold is used to determine a storage status.

Optionally, the data collection identifier includes at least one of the following:
a first identifier, used to indicate a corresponding measurement service;
a second identifier, used to indicate a corresponding measurement object;
a third identifier, used to indicate a corresponding measurement report configuration;
a fourth identifier, used to indicate a corresponding measurement parameter;
a fifth identifier, used to indicate a corresponding measurement reference signal; and
a sixth identifier, used to indicate a corresponding artificial intelligence AI functionality.

Optionally, the data collection list includes at least one of the following:
a first list, including information about a measurement service;
a second list, including information about a measurement object;
a third list, including information about a measurement report configuration;
a fourth list, including information about a measurement parameter;
a fifth list, including information about a measurement reference signal; and
a sixth list, including information about an AI functionality.

Optionally, the first data collection assistance information includes at least one of the following:
information about a first timer, used to indicate that before the first timer expires, the first terminal does not expect to receive a data collection request, or ignores a received data collection request;
a first data collection assistance information identifier associated with the first timer, used to indicate that before the first timer expires, the first terminal does not expect to receive a data collection request corresponding to the first data collection assistance information identifier, or ignores a received data collection request corresponding to the first data collection assistance information identifier;
a first data collection assistance information list associated with the first timer, used to indicate that before the first timer expires, the first terminal does not expect to receive a data collection request corresponding to the first data collection assistance information list, or ignores a received data collection request corresponding to the first data collection assistance information list; and
a second indication, used to indicate that a first storage space of the first terminal reaches a preset status, where the first storage space is a space for storing data collected by the first terminal.

Optionally, the first data collection assistance information identifier includes at least one of the following:
a seventh identifier, where a measurement service corresponding to the seventh identifier is associated with the first timer;
an eighth identifier, where a measurement object corresponding to the eighth identifier is associated with the first timer;
a ninth identifier, where a measurement report configuration corresponding to the ninth identifier is associated with the first timer;
a tenth identifier, where a measurement parameter corresponding to the tenth identifier is associated with the first timer;
an eleventh identifier, where a measurement reference signal corresponding to the eleventh identifier is associated with the first timer; and
a twelfth identifier, where an AI functionality corresponding to the twelfth identifier is associated with the first timer.

Optionally, the first data collection assistance information list includes at least one of the following:
a seventh list, where a measurement service corresponding to measurement service information in the seventh list is associated with the first timer;
an eighth list, where a measurement object corresponding to measurement object information in the eighth list is associated with the first timer;
a ninth list, where a measurement report configuration corresponding to measurement report configuration information in the ninth list is associated with the first timer;
a tenth list, where a measurement parameter corresponding to measurement parameter information in the tenth list is associated with the first timer;
an eleventh list, where a measurement reference signal corresponding to measurement reference signal information in the eleventh list is associated with the first timer; and
a twelfth list, where an AI functionality corresponding to AI functionality information in the twelfth list is associated with the first timer.

Optionally, the apparatus further includes at least one of the following:
a first processing unit configured to, in a case that the first data collection assistance information includes the information about the first timer, stop sending a data collection request to the first terminal before the first timer expires;
a second processing unit configured to, in a case that the first data collection assistance information includes the information about the first timer and includes the first data collection assistance information identifier, stop sending a data collection request corresponding to the first data collection assistance information identifier to the first terminal before the first timer expires; and
a third processing unit configured to, in a case that the first data collection assistance information includes the information about the first timer and includes the first data collection assistance information list, stop sending a data collection request corresponding to the first data collection assistance information list to the first terminal before the first timer expires.

Optionally, the apparatus further includes:
a second sending unit configured to, in a case that the first data collection assistance information includes the second indication, send fourth information to the first terminal, where the fourth information is used to request reporting of data.

Optionally, the apparatus further includes:
a third sending unit configured to send fifth information to the first terminal, where the fifth information is used to indicate release of the first configuration information.

Optionally, the apparatus further includes:
a fourth sending unit configured to, in a case that the first terminal needs to hand over to a target cell, if the first timer has not expired or the first terminal has not completed data reporting, send sixth information to a second base station, where the sixth information includes the first data collection assistance information, and the second base station is a base station corresponding to the target cell.

Optionally, the apparatus further includes:
a fourth processing unit configured to, in a case that the first terminal enters an inactive status, if the first timer has not expired or the first terminal has not completed data reporting, maintain the first data collection assistance information.

Optionally, the apparatus further includes:
a fifth sending unit configured to, in a case that the first terminal initiates a connection resume request, if the first timer has not expired or the first terminal has not completed data reporting, send seventh information to a third base station, where the seventh information includes the first data collection assistance information, and the third base station is a base station corresponding to the connection resume request.

Optionally, the first information is carried through a first message, where the first message is a data collection request message.

Optionally, the second information is carried through any one of the following messages:
a second message, where the second message is a data collection response MeasurementReport message; and
a third message, where the third message is a UE assistance information UEAssistanceInformation message.

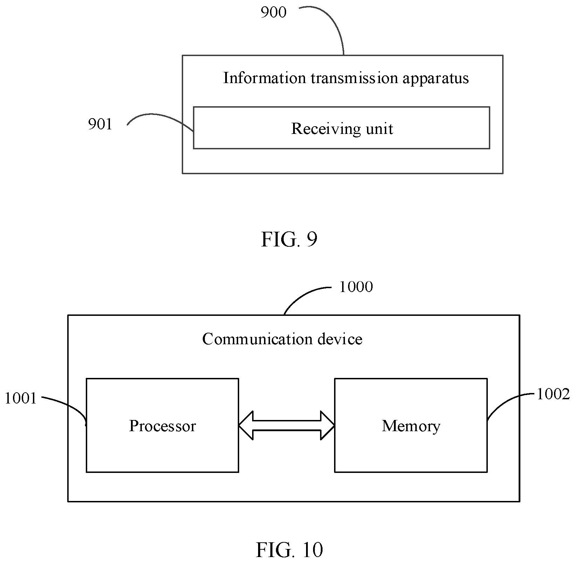

Referring to FIG. 9, an embodiment of this application further provides an information transmission apparatus which may be applied to a first base station. As shown in FIG. 9, the information transmission apparatus 900 includes:
a receiving unit 901 configured to receive eighth information from a fourth base station, where the eighth information includes second data collection assistance information, and the second data collection assistance information is data collection assistance information for representing a data collection preference or data collection status of a second terminal; where
the second terminal is a terminal that needs to establish a connection to the first base station.

Optionally, the second data collection assistance information includes at least one of the following:
information about a second timer, used to indicate that before the second timer expires, the second terminal does not expect to receive a data collection request, or ignores a received data collection request;
a second data collection assistance information identifier associated with the second timer, used to indicate that before the second timer expires, the second terminal does not expect to receive a data collection request corresponding to the second data collection assistance information identifier, or ignores a received data collection request corresponding to the second data collection assistance information identifier;
a second data collection assistance information list associated with the second timer, used to indicate that before the second timer expires, the second terminal does not expect to receive a data collection request corresponding to the second data collection assistance information list, or ignores a received data collection request corresponding to the second data collection assistance information list; and
a third indication, used to indicate that a second storage space of the second terminal reaches a preset status, where the second storage space is a space for storing data collected by the second terminal.

Optionally, the apparatus further includes at least one of the following:
a first processing unit configured to, in a case that the second data collection assistance information includes the information about the second timer, stop sending a data collection request to the second terminal before the second timer expires;
a second processing unit configured to, in a case that the second data collection assistance information includes the information about the second timer and includes the second data collection assistance information identifier, stop sending a data collection request corresponding to the second data collection assistance information identifier to the second terminal before the second timer expires; and
a third processing unit configured to, in a case that the second data collection assistance information includes the information about the second timer and includes the second data collection assistance information list, stop sending a data collection request corresponding to the second data collection assistance information list to the second terminal before the second timer expires.

Optionally, the apparatus further includes:
a sending unit configured to, in a case that the second data collection assistance information includes the third indication, send ninth information to the second terminal, where the ninth information is used to request reporting of data.

The information transmission apparatus in the embodiments of this application may be an electronic device, such as an electronic device having an operating system, or may be a component in an electronic device, such as an integrated circuit or a chip. The electronic device may be a terminal, or may be another device different from a terminal. For example, the terminal may include, but is not limited to, the types of the terminal 11 listed above, and the another device may be a server, a network attached storage (Network Attached Storage, NAS), or the like, which are not specifically limited in the embodiments of this application.

The information transmission apparatus according to the embodiments of this application can implement the processes implemented by the method embodiments in FIG. 3 to FIG. 6, with the same technical effects achieved. To avoid repetition, details are not described herein again.

As shown in FIG. 10, an embodiment of this application further provides a communication device 1000 including a processor 1001 and a memory 1002, where the memory 1002 stores a program or instructions capable of running on the processor 1001. For example, in a case that the communication device 1000 is a terminal, the program or instructions, when executed by the processor 1001, implement the steps of the foregoing method embodiments on the terminal side, with the same technical effects achieved. In a case that the communication device 1000 is a network-side device, the program or instructions, when executed by the processor 1001, implement the steps of the foregoing method embodiments on the first base station side, with the same technical effects achieved. To avoid repetition, details are not described herein again.

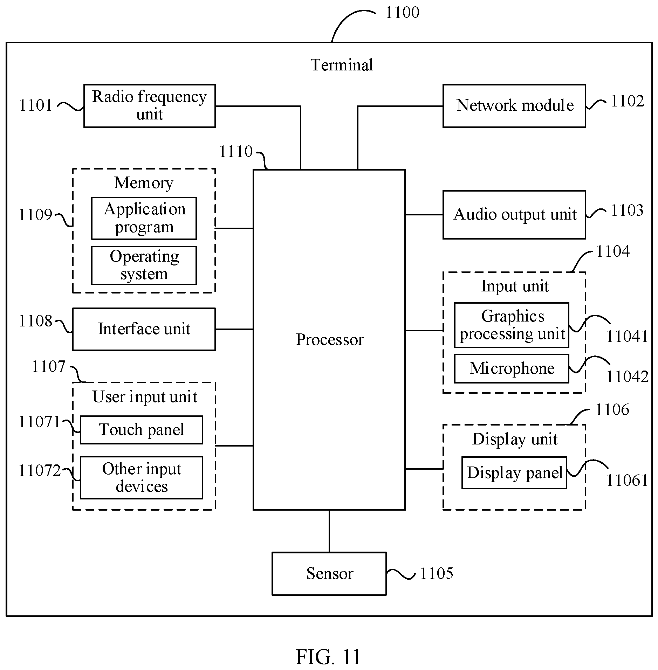

An embodiment of this application further provides a terminal including a processor and a communication interface, where the communication interface is coupled to the processor, and the processor is configured to run a program or instructions to implement the steps of the method embodiments shown in FIG. 3 and FIG. 6. This terminal embodiment corresponds to the foregoing method embodiment on the terminal side. The implementation processes and implementations of the foregoing method embodiment may all be applied to this terminal embodiment, with the same technical effects achieved. Specifically, FIG. 11 is a schematic diagram of a hardware structure of a terminal implementing an embodiment of this application.

The terminal 1100 includes but is not limited to at least some components of: a radio frequency unit 1101, a network module 1102, an audio output unit 1103, an input unit 1104, a sensor 1105, a display unit 1106, a user input unit 1107, an interface unit 1108, a memory 1109, and a processor 1110.

Those skilled in the art can understand that the terminal 1100 may further include a power supply (such as a battery) supplying power to the components, and the power supply may be logically connected to the processor 1110 through a power management system, so as to implement functions such as charging management, discharging management, and power consumption management by using the power management system. The structure of the terminal shown in FIG. 11 does not constitute any limitation on the terminal. The terminal may include more or fewer components than shown in the figure, or a combination of some components, or the components disposed differently. Details are not described herein.

It should be understood that in the embodiments of this application, the input unit 1104 may include a graphics processing unit (Graphics Processing Unit, GPU) 11041 and a microphone 11042. The graphics processing unit 11041 processes image data of a still picture or video obtained by an image capture apparatus (such as a camera) in a video capture mode or an image capture mode. The display unit 1106 may include a display panel 11061, and the display panel 11061 may be configured in the form of a liquid crystal display, an organic light-emitting diode, or the like. The user input unit 1107 includes at least one of a touch panel 11071 and other input devices 11072. The touch panel 11071 is also referred to as a touchscreen. The touch panel 11071 may include two parts: a touch detection apparatus and a touch controller. The other input devices 11072 may include but are not limited to a physical keyboard, a function key (such as a volume control key or an on/off key), a trackball, a mouse, and a joystick. Details are not described herein.

In the embodiments of this application, after receiving downlink data from a network-side device, the radio frequency unit 1101 may transmit the received downlink data to the processor 1110 for processing. In addition, the radio frequency unit 1101 may send uplink data to the network-side device. Typically, the radio frequency unit 1101 includes but is not limited to an antenna, an amplifier, a transceiver, a coupler, a low noise amplifier, and a duplexer.

The memory 1109 may be configured to store a software program or instructions and various data. The memory 1109 may mainly include a first storage area for storing a program or instructions and a second storage area for storing data. The first storage area may store an operating system, an application program or instructions required by at least one function (for example, a sound play function or an image play function), and the like. In addition, the memory 1109 may include a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synch link dynamic random access memory (Synch link DRAM, SLDRAM), or a direct rambus random access memory (Direct Rambus RAM, DRRAM). The memory 1109 in the embodiments of this application includes but is not limited to these and any other suitable types of memory.

The processor 1110 may include one or more processing units. Optionally, the processor 1110 integrates an application processor and a modem processor. The application processor mainly processes operations related to an operating system, a user interface, an application program, and the like. The modem processor, such as a baseband processor, mainly processes radio communication signals. It can be understood that the modem processor may alternatively be not integrated into the processor 1110.

The radio frequency unit 1101 is configured to:
receive first information from a base station, where the first information includes first configuration information, the first configuration information is configuration information for indicating reporting of data collection assistance information, the data collection assistance information is assistance information for representing a data collection preference or a data collection status; and
send second information to the base station, where the second information includes first data collection assistance information, and the first data collection assistance information is data collection assistance information for representing the data collection preference or data collection status of the terminal.

In the embodiments of this application, the terminal can perform moderate data collection based on the reported data collection assistance information, thereby reducing the consumption of the terminal in data collection.

It can be understood that for implementation processes of the implementations mentioned in this embodiment, reference may be made to the relevant descriptions of the information transmission method embodiments on the terminal side, with the same or corresponding technical effects achieved. To avoid repetition, details are not described herein again.

An embodiment of this application further provides a network-side device including a processor and a communication interface, where the communication interface is coupled to the processor, and the processor is configured to run a program or instructions to implement the steps of the method embodiments shown in FIG. 4 and FIG. 5. This network-side device embodiment corresponds to the foregoing method embodiment on the first base station side. The implementation processes and implementations of the foregoing method embodiment on the first base station side may all be applied to this network-side device embodiment, with the same technical effects achieved.

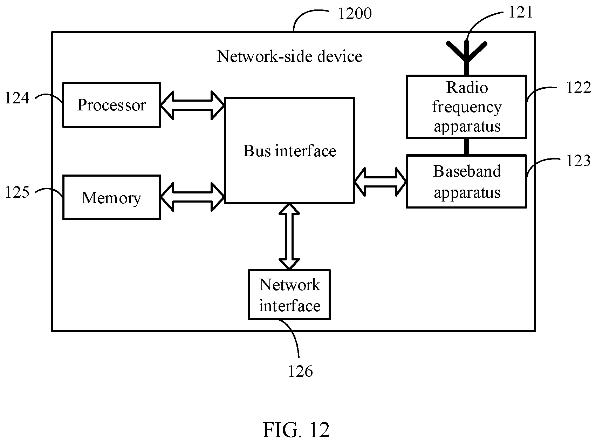

Specifically, an embodiment of this application further provides a network-side device. As shown in FIG. 12, the network-side device 1200 includes: an antenna 121, a radio frequency apparatus 122, a baseband apparatus 123, a processor 124, and a memory 125. The antenna 121 is connected to the radio frequency apparatus 122. In an uplink direction, the radio frequency apparatus 122 receives information via the antenna 121, and sends the received information to the baseband apparatus 123 for processing. In a downlink direction, the baseband apparatus 123 processes to-be-sent information, and sends the information to the radio frequency apparatus 122; and the radio frequency apparatus 122 processes the received information and then sends the information out via the antenna 121.

The method performed by the network-side device in the foregoing embodiments may be implemented in the baseband apparatus 123, and the baseband apparatus 123 includes a baseband processor.

The baseband apparatus 123 may include, for example, at least one baseband board, where multiple chips are disposed on the baseband board. As shown in FIG. 12, one chip is, for example, a baseband processor, and connected to the memory 125 via a bus interface, to invoke the program in the memory 125 to perform the operations of the network-side device shown in the foregoing method embodiments.

The network-side device may further include a network interface 126. The interface is, for example, a common public radio interface (Common Public Radio Interface, CPRI).

Specifically, the network-side device 1200 in the embodiment of this application further includes: instructions or a program stored on the memory 125 and capable of running on the processor 124. The processor 124 invokes the instructions or program in the memory 125 to perform the method performed by the modules shown in FIG. 8 and FIG. 9, with the same technical effects achieved. To avoid repetition, details are not described herein again.

An embodiment of this application further provides a readable storage medium, where the readable storage medium stores a program or instructions. When the program or instructions are executed by a processor, the processes of the foregoing information transmission method embodiments are implemented, with the same technical effects achieved. To avoid repetition, details are not described herein again.

The processor is a processor in the terminal described in the foregoing embodiments. The readable storage medium includes a computer-readable storage medium, such as a computer read-only memory ROM, a random access memory RAM, a magnetic disk, or a compact disc. In some examples, the readable storage medium may be a non-transitory readable storage medium.

An embodiment of this application further provides a chip. The chip includes a processor and a communication interface, where the communication interface is coupled to the processor, and the processor is configured to run a program or instructions to implement the processes of the foregoing information transmission method embodiments, with the same technical effects achieved. To avoid repetition, details are not described herein again.

It should be understood that the chip mentioned in the embodiments of this application may also be referred to as a system-level chip, a system chip, a chip system, a system on chip, or the like.

An embodiment of this application further provides a computer program/program product, where the computer program/program product is stored in a storage medium, and the computer program/program product is executed by at least one processor to implement the processes of the foregoing information transmission method embodiments, with the same technical effects achieved. To avoid repetition, details are not described herein again.

An embodiment of this application further provides a communication system including: a terminal and a network-side device, where the terminal may be configured to perform the steps of the foregoing information transmission method on the terminal side, and the network-side device may be configured to perform the steps of the foregoing information transmission method on the first base station side.

It should be noted that in this specification, the terms "include", "comprise", or any of their variants are intended to cover a non-exclusive inclusion, such that a process, method, article, or apparatus that includes a series of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

By means of the foregoing description of the implementations, those skilled in the art may clearly understand that the method in the foregoing embodiments may be implemented by software with a necessary general hardware platform. Certainly, the method in the foregoing embodiments may also be implemented by hardware. The computer software product is stored in a storage medium (such as a ROM, a RAM, a magnetic disk, or a compact disc), and includes several instructions for instructing a terminal or a network-side device to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other implementations without departing from principles of this application and the protection scope of the claims, and all such implementations shall fall within the protection scope of this application.

## Claims

1. An information transmission method, comprising:
receiving, by a terminal, first information from a base station, wherein the first information comprises first configuration information, the first configuration information is configuration information for indicating reporting of data collection assistance information, and the data collection assistance information is assistance information for representing a data collection preference or a data collection status; and
sending, by the terminal, second information to the base station, wherein the second information comprises first data collection assistance information, and the first data collection assistance information is data collection assistance information for representing the data collection preference or data collection status of the terminal.

2. The method according to claim 1, wherein before the receiving, by a terminal, first information from a base station, the method further comprises:
sending, by the terminal, third information to the base station, wherein the third information is used to indicate that the terminal supports a target capability, and the target capability is a capability to report the data collection assistance information.

3. The method according to claim 1 or 2, wherein the first configuration information comprises at least one of the following:
a first indication, used to indicate establishment of the first configuration information;
a data collection identifier, wherein data corresponding to the data collection identifier is data allowed for reporting of the data collection assistance information;
a data collection list, wherein data corresponding to the data collection list is data allowed for reporting of the data collection assistance information; and
a target threshold, wherein the target threshold is used to determine a storage status.

4. The method according to claim 3, wherein the data collection identifier comprises at least one of the following:
a first identifier, used to indicate a corresponding measurement service;
a second identifier, used to indicate a corresponding measurement object;
a third identifier, used to indicate a corresponding measurement report configuration;
a fourth identifier, used to indicate a corresponding measurement parameter;
a fifth identifier, used to indicate a corresponding measurement reference signal; and
a sixth identifier, used to indicate a corresponding artificial intelligence AI functionality;
or
the data collection list comprises at least one of the following:
a first list, comprising information about a measurement service;
a second list, comprising information about a measurement object;
a third list, comprising information about a measurement report configuration;
a fourth list, comprising information about a measurement parameter;
a fifth list, comprising information about a measurement reference signal; and
a sixth list, comprising information about an AI functionality.

5. The method according to any one of claims 1 to 4, wherein the first data collection assistance information comprises at least one of the following:
information about a first timer, used to indicate that before the first timer expires, the terminal does not expect to receive a data collection request, or ignores a received data collection request;
a first data collection assistance information identifier associated with the first timer, used to indicate that before the first timer expires, the terminal does not expect to receive a data collection request corresponding to the first data collection assistance information identifier, or ignores a received data collection request corresponding to the first data collection assistance information identifier;
a first data collection assistance information list associated with the first timer, used to indicate that before the first timer expires, the terminal does not expect to receive a data collection request corresponding to the first data collection assistance information list, or ignores a received data collection request corresponding to the first data collection assistance information list; and
a second indication, used to indicate that a first storage space of the terminal reaches a preset status, wherein the first storage space is a space for storing data collected by the terminal.

6. The method according to claim 5, wherein the first data collection assistance information identifier comprises at least one of the following:
a seventh identifier, wherein a measurement service corresponding to the seventh identifier is associated with the first timer;
an eighth identifier, wherein a measurement object corresponding to the eighth identifier is associated with the first timer;
a ninth identifier, wherein a measurement report configuration corresponding to the ninth identifier is associated with the first timer;
a tenth identifier, wherein a measurement parameter corresponding to the tenth identifier is associated with the first timer;
an eleventh identifier, wherein a measurement reference signal corresponding to the eleventh identifier is associated with the first timer; and
a twelfth identifier, wherein an AI functionality corresponding to the twelfth identifier is associated with the first timer;
or
the first data collection assistance information list comprises at least one of the following:
a seventh list, wherein a measurement service corresponding to measurement service information in the seventh list is associated with the first timer;
an eighth list, wherein a measurement object corresponding to measurement object information in the eighth list is associated with the first timer;
a ninth list, wherein a measurement report configuration corresponding to measurement report configuration information in the ninth list is associated with the first timer;
a tenth list, wherein a measurement parameter corresponding to measurement parameter information in the tenth list is associated with the first timer;
an eleventh list, wherein a measurement reference signal corresponding to measurement reference signal information in the eleventh list is associated with the first timer; and
a twelfth list, wherein an AI functionality corresponding to AI functionality information in the twelfth list is associated with the first timer.

7. The method according to claim 5 or 6, wherein the method further comprises:
determining, by the terminal based on a target threshold, whether the first storage space reaches the preset status; wherein
the target threshold is used for the terminal to determine the storage status, and the target threshold is agreed upon by a protocol or configured by the base station.

8. The method according to claim 7, wherein the preset status is used to represent that the first storage space is in a full status or an insufficient status; and
the determining, by the terminal based on a target threshold, whether the first storage space reaches the preset status comprises at least one of the following:
in a case that a used proportion of the first storage space is higher than the target threshold, determining, by the terminal, that the first storage space reaches the preset status; and
in a case that a remaining space proportion of the first storage space is lower than the target threshold, determining, by the terminal, that the first storage space reaches the preset status.

9. The method according to claim 5 or 7 or 8, further comprising:
in a case that the first storage space reaches the preset status, releasing, by the terminal, second configuration information, or stopping collecting, by the terminal, data corresponding to second configuration information, or stopping storing, by the terminal, data corresponding to second configuration information; wherein
the second configuration information is configuration information related to data collection.

10. The method according to any one of claims 5 and 7 to 9, further comprising:
receiving, by the terminal, fourth information from the base station, wherein the fourth information is used to request reporting of data; and
reporting, by the terminal, data in the first storage space to the base station.

11. The method according to any one of claims 1 to 10, further comprising:
receiving, by the terminal, fifth information from the base station, wherein the fifth information is used to indicate release of the first configuration information; and
releasing, by the terminal, the first configuration information, or stopping collecting, by the terminal, data corresponding to the first configuration information, or stopping storing, by the terminal, data corresponding to the first configuration information.

12. The method according to any one of claims 1 to 11, wherein the first information is carried through a first message, wherein the first message is a data collection request message.

13. The method according to any one of claims 1 to 12, wherein the second information is carried through any one of the following messages:
a second message, wherein the second message is a data collection response MeasurementReport message; and
a third message, wherein the third message is a UE assistance information UEAssistanceInformation message.

14. An information transmission method, comprising:
sending, by a first base station, first information to a first terminal, wherein the first information comprises first configuration information, the first configuration information is configuration information for indicating reporting of data collection assistance information, and the data collection assistance information is assistance information for representing a data collection preference or a data collection status; and
receiving, by the first base station, second information from the first terminal, wherein the second information comprises first data collection assistance information, and the first data collection assistance information is data collection assistance information for representing the data collection preference or data collection status of the first terminal.

15. The method according to claim 14, wherein before the sending, by a first base station, first information to a first terminal, the method further comprises:
receiving, by the first base station, third information from the first terminal, wherein the third information is used to indicate that the first terminal supports a target capability, and the target capability is a capability to report the data collection assistance information.

16. The method according to claim 14 or 15, wherein the first configuration information comprises at least one of the following:
a first indication, used to indicate establishment of the first configuration information;
a data collection identifier, wherein data corresponding to the data collection identifier is data allowed for reporting of the data collection assistance information;
a data collection list, wherein data corresponding to the data collection list is data allowed for reporting of the data collection assistance information; and
a target threshold, wherein the target threshold is used to determine a storage status.

17. The method according to claim 16, wherein the data collection identifier comprises at least one of the following:
a first identifier, used to indicate a corresponding measurement service;
a second identifier, used to indicate a corresponding measurement object;
a third identifier, used to indicate a corresponding measurement report configuration;
a fourth identifier, used to indicate a corresponding measurement parameter;
a fifth identifier, used to indicate a corresponding measurement reference signal; and
a sixth identifier, used to indicate a corresponding artificial intelligence AI functionality;
or
the data collection list comprises at least one of the following:
a first list, comprising information about a measurement service;
a second list, comprising information about a measurement object;
a third list, comprising information about a measurement report configuration;
a fourth list, comprising information about a measurement parameter;
a fifth list, comprising information about a measurement reference signal; and
a sixth list, comprising information about an AI functionality.

18. The method according to any one of claims 14 to 17, wherein the first data collection assistance information comprises at least one of the following:
information about a first timer, used to indicate that before the first timer expires, the first terminal does not expect to receive a data collection request, or ignores a received data collection request;
a first data collection assistance information identifier associated with the first timer, used to indicate that before the first timer expires, the first terminal does not expect to receive a data collection request corresponding to the first data collection assistance information identifier, or ignores a received data collection request corresponding to the first data collection assistance information identifier;
a first data collection assistance information list associated with the first timer, used to indicate that before the first timer expires, the first terminal does not expect to receive a data collection request corresponding to the first data collection assistance information list, or ignores a received data collection request corresponding to the first data collection assistance information list; and
a second indication, used to indicate that a first storage space of the first terminal reaches a preset status, wherein the first storage space is a space for storing data collected by the first terminal.

19. The method according to claim 18, wherein the first data collection assistance information identifier comprises at least one of the following:
a seventh identifier, wherein a measurement service corresponding to the seventh identifier is associated with the first timer;
an eighth identifier, wherein a measurement object corresponding to the eighth identifier is associated with the first timer;
a ninth identifier, wherein a measurement report configuration corresponding to the ninth identifier is associated with the first timer;
a tenth identifier, wherein a measurement parameter corresponding to the tenth identifier is associated with the first timer;
an eleventh identifier, wherein a measurement reference signal corresponding to the eleventh identifier is associated with the first timer; and
a twelfth identifier, wherein an AI functionality corresponding to the twelfth identifier is associated with the first timer;
or
the first data collection assistance information list comprises at least one of the following:
a seventh list, wherein a measurement service corresponding to measurement service information in the seventh list is associated with the first timer;
an eighth list, wherein a measurement object corresponding to measurement object information in the eighth list is associated with the first timer;
a ninth list, wherein a measurement report configuration corresponding to measurement report configuration information in the ninth list is associated with the first timer;
a tenth list, wherein a measurement parameter corresponding to measurement parameter information in the tenth list is associated with the first timer;
an eleventh list, wherein a measurement reference signal corresponding to measurement reference signal information in the eleventh list is associated with the first timer; and
a twelfth list, wherein an AI functionality corresponding to AI functionality information in the twelfth list is associated with the first timer.

20. The method according to claim 18 or 19, further comprising at least one of the following:
in a case that the first data collection assistance information comprises the information about the first timer, stopping sending, by the first base station, a data collection request to the first terminal before the first timer expires;
in a case that the first data collection assistance information comprises the information about the first timer and comprises the first data collection assistance information identifier, stopping sending, by the first base station, a data collection request corresponding to the first data collection assistance information identifier to the first terminal before the first timer expires; and
in a case that the first data collection assistance information comprises the information about the first timer and comprises the first data collection assistance information list, stopping sending, by the first base station, a data collection request corresponding to the first data collection assistance information list to the first terminal before the first timer expires.

21. The method according to claim 18, further comprising:
in a case that the first data collection assistance information comprises the second indication, sending, by the first base station, fourth information to the first terminal, wherein the fourth information is used to request reporting of data.

22. The method according to any one of claims 14 to 21, further comprising:
sending, by the first base station, fifth information to the first terminal, wherein the fifth information is used to indicate release of the first configuration information.

23. The method according to claim 18, further comprising:
in a case that the first terminal needs to hand over to a target cell, if the first timer has not expired or the first terminal has not completed data reporting, sending, by the first base station, sixth information to a second base station, wherein the sixth information comprises the first data collection assistance information, and the second base station is a base station corresponding to the target cell.

24. The method according to claim 18, further comprising:
in a case that the first terminal enters an inactive status, if the first timer has not expired or the first terminal has not completed data reporting, maintaining, by the first base station, the first data collection assistance information.

25. The method according to claim 24, further comprising:
in a case that the first terminal initiates a connection resume request, if the first timer has not expired or the first terminal has not completed data reporting, sending, by the first base station, seventh information to a third base station, wherein the seventh information comprises the first data collection assistance information, and the third base station is a base station corresponding to the connection resume request.

26. The method according to any one of claims 14 to 25, wherein the first information is carried through a first message, wherein the first message is a data collection request message.

27. The method according to any one of claims 14 to 26, wherein the second information is carried through any one of the following messages:
a second message, wherein the second message is a data collection response MeasurementReport message; and
a third message, wherein the third message is a UE assistance information UEAssistanceInformation message.

28. An information transmission method, comprising:
receiving, by a first base station, eighth information from a fourth base station, wherein the eighth information comprises second data collection assistance information, and the second data collection assistance information is data collection assistance information for representing a data collection preference or data collection status of a second terminal; wherein
the second terminal is a terminal that needs to establish a connection to the first base station.

29. The method according to claim 28, wherein the second data collection assistance information comprises at least one of the following:
information about a second timer, used to indicate that before the second timer expires, the second terminal does not expect to receive a data collection request, or ignores a received data collection request;
a second data collection assistance information identifier associated with the second timer, used to indicate that before the second timer expires, the second terminal does not expect to receive a data collection request corresponding to the second data collection assistance information identifier, or ignores a received data collection request corresponding to the second data collection assistance information identifier;
a second data collection assistance information list associated with the second timer, used to indicate that before the second timer expires, the second terminal does not expect to receive a data collection request corresponding to the second data collection assistance information list, or ignores a received data collection request corresponding to the second data collection assistance information list; and
a third indication, used to indicate that a second storage space of the second terminal reaches a preset status, wherein the second storage space is a space for storing data collected by the second terminal.

30. The method according to claim 29, further comprising at least one of the following:
in a case that the second data collection assistance information comprises the information about the second timer, stopping sending, by the first base station, a data collection request to the second terminal before the second timer expires;
in a case that the second data collection assistance information comprises the information about the second timer and comprises the second data collection assistance information identifier, stopping sending, by the first base station, a data collection request corresponding to the second data collection assistance information identifier to the second terminal before the second timer expires; and
in a case that the second data collection assistance information comprises the information about the second timer and comprises the second data collection assistance information list, stopping sending, by the first base station, a data collection request corresponding to the second data collection assistance information list to the second terminal before the second timer expires.

31. The method according to claim 29, further comprising:
in a case that the second data collection assistance information comprises the third indication, sending, by the first base station, ninth information to the second terminal, wherein the ninth information is used to request reporting of data.

32. An information transmission apparatus, applied to a terminal, wherein the apparatus comprises:
a first receiving unit configured to receive first information from a base station, wherein the first information comprises first configuration information, the first configuration information is configuration information for indicating reporting of data collection assistance information, and the data collection assistance information is assistance information for representing a data collection preference or a data collection status; and
a first sending unit configured to send second information to the base station, wherein the second information comprises first data collection assistance information, and the first data collection assistance information is data collection assistance information for representing the data collection preference or data collection status of the terminal.

33. The apparatus according to claim 32, further comprising:
a second sending unit configured to send third information to the base station, wherein the third information is used to indicate that the terminal supports a target capability, and the target capability is a capability to report the data collection assistance information.

34. The apparatus according to claim 32 or 33, wherein the first data collection assistance information comprises at least one of the following:
information about a first timer, used to indicate that before the first timer expires, the terminal does not expect to receive a data collection request, or ignores a received data collection request;
a first data collection assistance information identifier associated with the first timer, used to indicate that before the first timer expires, the terminal does not expect to receive a data collection request corresponding to the first data collection assistance information identifier, or ignores a received data collection request corresponding to the first data collection assistance information identifier;
a first data collection assistance information list associated with the first timer, used to indicate that before the first timer expires, the terminal does not expect to receive a data collection request corresponding to the first data collection assistance information list, or ignores a received data collection request corresponding to the first data collection assistance information list; and
a second indication, used to indicate that a first storage space of the terminal reaches a preset status, wherein the first storage space is a space for storing data collected by the terminal.

35. The apparatus according to claim 34, wherein the apparatus further comprises:
a first processing unit configured to determine, based on a target threshold, whether the first storage space reaches the preset status; wherein
the target threshold is used for the terminal to determine the storage status, and the target threshold is agreed upon by a protocol or configured by the base station.

36. The apparatus according to claim 34 or 35, further comprising:
a second processing unit configured to, in a case that the first storage space reaches the preset status, release, for the terminal, second configuration information, or stop collecting, for the terminal, data corresponding to second configuration information, or stop storing, for the terminal, data corresponding to second configuration information; wherein
the second configuration information is configuration information related to data collection.

37. An information transmission apparatus, applied to a first base station, wherein the apparatus comprises:
a first sending unit configured to send first information to a first terminal, wherein the first information comprises first configuration information, the first configuration information is configuration information for indicating reporting of data collection assistance information, and the data collection assistance information is assistance information for representing a data collection preference or a data collection status; and
a first receiving unit configured to receive second information from the first terminal, wherein the second information comprises first data collection assistance information, and the first data collection assistance information is data collection assistance information for representing the data collection preference or data collection status of the first terminal.

38. The apparatus according to claim 37, further comprising:
a second receiving unit configured to receive third information from the first terminal, wherein the third information is used to indicate that the first terminal supports a target capability, and the target capability is a capability to report the data collection assistance information.

39. The apparatus according to claim 37 or 38, wherein the first data collection assistance information comprises at least one of the following:
information about a first timer, used to indicate that before the first timer expires, the first terminal does not expect to receive a data collection request, or ignores a received data collection request;
a first data collection assistance information identifier associated with the first timer, used to indicate that before the first timer expires, the first terminal does not expect to receive a data collection request corresponding to the first data collection assistance information identifier, or ignores a received data collection request corresponding to the first data collection assistance information identifier;
a first data collection assistance information list associated with the first timer, used to indicate that before the first timer expires, the first terminal does not expect to receive a data collection request corresponding to the first data collection assistance information list, or ignores a received data collection request corresponding to the first data collection assistance information list; and
a second indication, used to indicate that a first storage space of the first terminal reaches a preset status, wherein the first storage space is a space for storing data collected by the first terminal.

40. The apparatus according to claim 39, further comprising at least one of the following:
a first processing unit configured to, in a case that the first data collection assistance information comprises the information about the first timer, stop sending a data collection request to the first terminal before the first timer expires;
a second processing unit configured to, in a case that the first data collection assistance information comprises the information about the first timer and comprises the first data collection assistance information identifier, stop sending a data collection request corresponding to the first data collection assistance information identifier to the first terminal before the first timer expires; and
a third processing unit configured to, in a case that the first data collection assistance information comprises the information about the first timer and comprises the first data collection assistance information list, stop sending a data collection request corresponding to the first data collection assistance information list to the first terminal before the first timer expires.

41. The apparatus according to claim 39, further comprising:
a second sending unit configured to, in a case that the first data collection assistance information comprises the second indication, send fourth information to the first terminal, wherein the fourth information is used to request reporting of data.

42. The apparatus according to claim 39, further comprising:
a fourth sending unit configured to, in a case that the first terminal needs to hand over to a target cell, if the first timer has not expired or the first terminal has not completed data reporting, send sixth information to a second base station, wherein the sixth information comprises the first data collection assistance information, and the second base station is a base station corresponding to the target cell.

43. An information transmission apparatus, applied to a first base station, wherein the apparatus comprises:
a receiving unit configured to receive eighth information from a fourth base station, wherein the eighth information comprises second data collection assistance information, the second data collection assistance information is data collection assistance information for representing a data collection preference or data collection status of a second terminal; wherein
the second terminal is a terminal that needs to establish a connection to the first base station.

44. The apparatus according to claim 43, wherein the second data collection assistance information comprises at least one of the following:
information about a second timer, used to indicate that before the second timer expires, the second terminal does not expect to receive a data collection request, or ignores a received data collection request;
a second data collection assistance information identifier associated with the second timer, used to indicate that before the second timer expires, the second terminal does not expect to receive a data collection request corresponding to the second data collection assistance information identifier, or ignores a received data collection request corresponding to the second data collection assistance information identifier;
a second data collection assistance information list associated with the second timer, used to indicate that before the second timer expires, the second terminal does not expect to receive a data collection request corresponding to the second data collection assistance information list, or ignores a received data collection request corresponding to the second data collection assistance information list; and
a third indication, used to indicate that a second storage space of the second terminal reaches a preset status, wherein the second storage space is a space for storing data collected by the second terminal.

45. The apparatus according to claim 44, further comprising at least one of the following:
a first processing unit configured to, in a case that the second data collection assistance information comprises the information about the second timer, stop sending a data collection request to the second terminal before the second timer expires;
a second processing unit configured to, in a case that the second data collection assistance information comprises the information about the second timer and comprises the second data collection assistance information identifier, stop sending a data collection request corresponding to the second data collection assistance information identifier to the second terminal before the second timer expires; and
a third processing unit configured to, in a case that the second data collection assistance information comprises the information about the second timer and comprises the second data collection assistance information list, stop sending a data collection request corresponding to the second data collection assistance information list to the second terminal before the second timer expires.

46. The apparatus according to claim 44, further comprising:
a sending unit configured to, in a case that the second data collection assistance information comprises the third indication, send ninth information to the second terminal, wherein the ninth information is used to request reporting of data.

47. A communication device, comprising a processor and a memory, wherein the memory stores a program or instructions capable of running on the processor, and the program or instructions, when executed by the processor, implement the steps of the information transmission method according to any one of claims 1 to 13, or implement the steps of the information transmission method according to any one of claims 14 to 27, or implement the steps of the information transmission method according to any one of claims 28 to 31.

48. A readable storage medium, wherein a program or instructions are stored on the readable storage medium, and the program or instructions, when executed by a processor, implement the steps of the information transmission method according to any one of claims 1 to 13, or implement the steps of the information transmission method according to any one of claims 14 to 27, or implement the steps of the information transmission method according to any one of claims 28 to 31.
